# FASCICULE DE BREVET EUROPEEN

(11) **EP 1 513 673 B1**
(45) Date de publication et mention de la délivrance du brevet: **26.04.2006**
(21) Numéro de dépôt: 03727440.4
(22) Date de dépôt: 06.05.2003
(51) Int. Cl.: B29D 30/38, B29D 30/30, B29D 30/70, B29C 70/38, B21C 47/26, B21F 1/04

(54) **APPAREIL ET PROCEDE D'APPLICATION D'UNE BANDELETTE SUR UNE SURFACE ROTATIVE**
VORRICHTUNG UND VERFAHREN ZUM AUFBRINGEN EINES STREIFENS AUF EINE ROTIERENDE OBERFLÄCHE
DEVICE AND METHOD FOR APPLYING A STRIP TO A ROTARY SURFACE

(30) Priorité: 29.05.2002 FR 0206871
(43) Date de publication de la demande: 16.03.2005
(73) Titulaire: Société de Technologie Michelin, 63000 Clermont-Ferrand (FR); MICHELIN RECHERCHE ET TECHNIQUE S.A., CH-1763 Granges-Paccot (CH)
(72) Inventeur: MEYER, Daniel, 63400 Chamalieres (FR)
(74) Mandataire: Bauvir, Jacques
(86) Numéro de dépôt international: PCT/EP2003/004723
(87) Numéro de publication internationale: WO 2003/099545

(56) Documents cités:
- EP-A- 0 335 718
- EP-A- 0 724 949
- EP-A- 1 208 963
- US-A- 4 874 455

## Description

L'invention concerne un appareil d'application d'une bandelette de renforcement sur une surface de réception rotative, notamment pour fabriquer des pneumatiques.

L'intérêt de disposer un renforcement annulaire dans les pneumatiques, sur toute leur périphérie, a été perçu depuis longtemps. Un tel renforcement peut, en particulier, être constitué par la une nappe comprenant des câblés enroulés circonférentiellement et disposés radialement sur la carcasse du pneumatique. Cette nappe est couramment appelée « nappe à zéro degré ». Un câblé textile ou métallique désigne un fil unitaire ou plusieurs fils assemblés de manières à travailler ensemble ou encore, par extension, un retors.

Or, lors de la cuisson des pneumatiques comportant une nappe à zéro degré, les câblés de cette nappe subissent dans le moule de cuisson une conformation dont il est nécessaire de tenir compte pour l'architecture finale des pneumatiques. Ce phénomène peut engendrer de grandes difficultés, dans le cas où les câblés qui composent la nappe n'acceptent pas d'allongement lors de la conformation dans le moule, du fait de leur rigidité.

Diverses solutions ont été envisagées pour résoudre ce problème. Certaines portent sur la nature des câblés. Ainsi, par exemple, l'utilisation de fils métalliques dits « bi-élastiques » permet de réaliser un compromis entre les propriétés de rigidité et d'allongement de la nappe obtenue. Bien qu'intéressante, une telle solution n'est pas sans conséquence sur la nature du renforcement des pneumatiques. Il est en effet nécessaire de compenser la baisse de rigidité de la nappe à zéro degré obtenue, en rajoutant des nappes supplémentaires ou, en modifiant les mélanges caoutchouteux.

Un autre type de solution propose des modifications de pose de produits à cru permettant d'obtenir les architectures à cuit souhaitées. Ainsi, est apparue l'idée de poser les câblés sous forme ondulée dans le pneumatique cru de telle manière que, suite à la conformation en moule de cuisson ils perdent leur ondulation et soient alors orientés uniformément dans une direction faisant un angle proche de zéro degré par rapport à la direction circonférentielle.

Cette solution astucieuse présente néanmoins des difficultés de mise en oeuvre.

En effet, le pneumatique cru a été assemblé sur un tambour cylindrique ou légèrement galbé alors que le pneumatique cuit sortant du moule de cuisson est, par rapport à cette première forme, surgalbé. Par conséquent, lors de la conformation, les déformations subies par le pneumatique vont être beaucoup plus importantes au centre dudit pneumatique qu'au niveau de ses épaules. Il est donc nécessaire d'être capable de poser industriellement un câblé avec des ondulations d'amplitudes et de périodes différentes, selon sa position transversale afin que la nappe réalisée présente, après conformation en presse, des fils orientés sensiblement à zéro degré quelle que soit leur position transversale, proche du centre ou des épaules.

La publication EP-A-0 724 949, conformément au préambule de la revendication 1, décrit un appareil d'application de fils textiles ou métalliques sur une surface rotative avec des ondulations sinusoïdales. Des moyens de déplacements des fils en translation transversale par rapport à la direction de délivrance des fils permettent d'obtenir une telle pose, l'amplitude et la période de la sinusoïde étant maîtrisée grâce au contrôle et à la commande des vitesses de rotation de la surface de pose, de l'élément délivrant les fils et de la commande des moyens de déplacement. Cependant, ces moyens de déplacements sont constitués par une filière translatable dans la direction transversale, actionnée par un moteur par l'intermédiaire d'une bielle fixée sur un volant motorisé.

Cela signifie en pratique que, la vitesse de rotation de la surface de pose étant déterminée, pour modifier l'amplitude des ondulations des fils sur cette surface en continu, il faut modifier la vitesse de l'élément délivrant les fils pour modifier la quantité de fils délivrés et modifier la position de la bielle par rapport au volant pour synchroniser la modification de l'amplitude des ondulations réalisées. La réalisation de cette dernière modification en continu paraît donc difficilement envisageable. De plus, il est clair, qu'en fonction de la sinusoïde désirée, la vitesse de pose elle aussi sera limitée afin de ne pas gêner le mouvement motorisé de la filière.

La publication EP-A-1 208 963, qui appartient à l'état de la technique conformément à l'article 54(3), apporte une première solution aux difficultés évoquées ci dessus mais reste limitée à la pose d'un seul fil ou câblé.

Il s'avère toutefois intéressant, pour améliorer le temps de pose de la nappe, d'enrouler non pas un seul fil ou câblé, mais un ensemble continu de fils ou de câblés disposés parallèlement entre eux et constituant une bandelette de renforcement. Les fils ou câblés s'étendent dans la direction de la longueur de la bandelette et sont généralement enrobés dans un mélange caoutchouteux. La dépose du nombre de fils ou de câblés désiré s'effectue alors en un plus faible nombre de tours de la surface de réception.

Toutefois la pose d'une bandelette avec des ondulations sinusoïdales sur un sommet de pneumatique rencontre toute une série de difficultés liées à la faible résistance de la bandelette au cisaillement latéral et pouvant provoquer des déformations indésirables ou des replis de la bandelette sur elle-même ainsi que des absences de recouvrement d'une partie du sommet.

L'invention vise un appareil d'application permettant une application simultanée de plusieurs câblés sous forme d'une bandelette de renforcement et palliant l'ensemble des inconvénients précités.

Selon l'invention, l'appareil d'application d'une bandelette de renforcement sur une surface de réception rotative comprend des moyens de délivrance de la bandelette, des moyens de déplacement transversal par rapport à la surface de réception et des moyens de pose de la bandelette sur ladite surface de réception, est caractérisé en ce que les moyens de délivrance de la bandelette amènent cette dernière vers les moyens de déplacement transversal avec une orientation du plan de la nappe de fils ou de câblés de la bandelette sensiblement perpendiculaire à l'axe de rotation de la surface de réception rotative, et que les moyens de pose de la bandelette, situés en sortie des moyens de déplacement transversal, opèrent un pivotement à 90° du plan de la nappe de fils ou de câblés de ladite bandelette autour d'un axe parallèle à la direction de progression de la bandelette, afin de disposer le plan de la nappe de fils ou de câblés de la bandelette tangentiellement par rapport à la surface de réception.

Cette orientation particulière du plan de la nappe de fils ou de câblés constituant la bandelette pendant le déplacement transversal permet de faire subir simultanément les ondulations à chaque câblé de la bandelette sans opérer sur la largeur de la bandelette et notamment sans risquer de déformations de la bandelette. Et, après pivotement de la bandelette, cette dernière peut être posée tangentiellement à la surface de réception avec les ondulations ainsi réalisées.

Le nombre de fils ou de câblés déposés simultanément est généralement très inférieur au nombre de fils constituant la « nappe à zéro degré » une fois posée. On détermine ce nombre en fonction de la largeur maximale de la bandelette qu'il est possible de mettre en oeuvre. Cette largeur est fixée expérimentalement en fonction de la raideur des fils ou des câblés et de l'amplitude des ondulations, et peut aller de quelques millimètres à plusieurs dizaines de millimètres. Pour des raisons de commodités et de standardisation, elle se situe généralement entre 10 et 20 mm. La bandelette comprenant au moins deux et jusqu'à quelques dizaines de fils et de câblés, selon le diamètre et l'arrangement de ces derniers.

L'invention concerne également un procédé d'application d'une bandelette de renforcement sur une surface de réception rotative, notamment pour fabriquer des pneumatiques, qui comprend les étapes suivantes :
- on délivre une bandelette dont l'orientation du plan de la nappe de fils ou de câblés de la bandelette est sensiblement perpendiculaire à l'axe de rotation de la surface de réception,
- on déplace la bandelette alternativement et dans une direction perpendiculaire au plan de la nappe de fils ou de câblés de la bandelette afin de créer des ondulations sur cette dernière,
- on pivote la bandelette de 90° autour d'un axe parallèle à la direction de progression de la bandelette et on pose cette dernière tangentiellement sur la surface de réception rotative.

D'autres caractéristiques et avantages de l'invention apparaîtront à la lecture de la description d'un exemple de réalisation d'un appareil d'application d'une bandelette de renforcement conforme à l'invention, en référence aux dessins dans lesquels :
- la figure 1 est une représentation schématique en élévation latérale de l'appareil d'application conforme à l'invention,
- la figure 2 est une coupe partielle de l'appareil d'application selon la ligne II représentée sur la figure 1,
- la figure 3 est une représentation partielle en vue de dessous de l'appareil d'application selon la flèche F représentée à la figure 1,
- la figure 4 est une représentation perspective partielle en vue de dessus de l'appareil selon la flèche F' représentée à la figure 1.

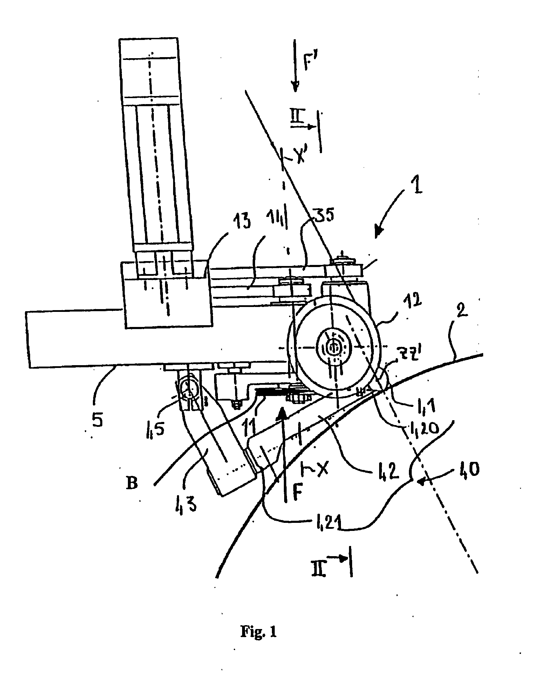

Selon la figure 1, l'appareil d'application 1 d'une bandelette B de renforcement sur une surface de réception rotative (2) comprend un corps (5), la bandelette étant appliquée sur la surface de réception (2) dans une direction sensiblement perpendiculaire à l'axe de rotation de ladite surface tangentiellement à cette dernière. La surface de réception (2) tourne avec une vitesse circonférentielle contrôlée qu'on désignera par V2.

Dans ce qui suit, on désignera par « direction de progression de la bandelette », la direction sensiblement perpendiculaire à l'axe de rotation de la surface de réception (2).

Le corps (5) porte des moyens de délivrance (10) de la bandelette, des moyens de déplacement transversal (20, 30) de la bandelette et enfin des moyens de pose (40) de cette bandelette sur la surface de réception (2). Ces différents organes agissent successivement pour réaliser l'application de la bandelette sur la surface de réception (2) avec les ondulations souhaitées de la bandelette et donc des fils ou des câblés contenus dans la bandelette.

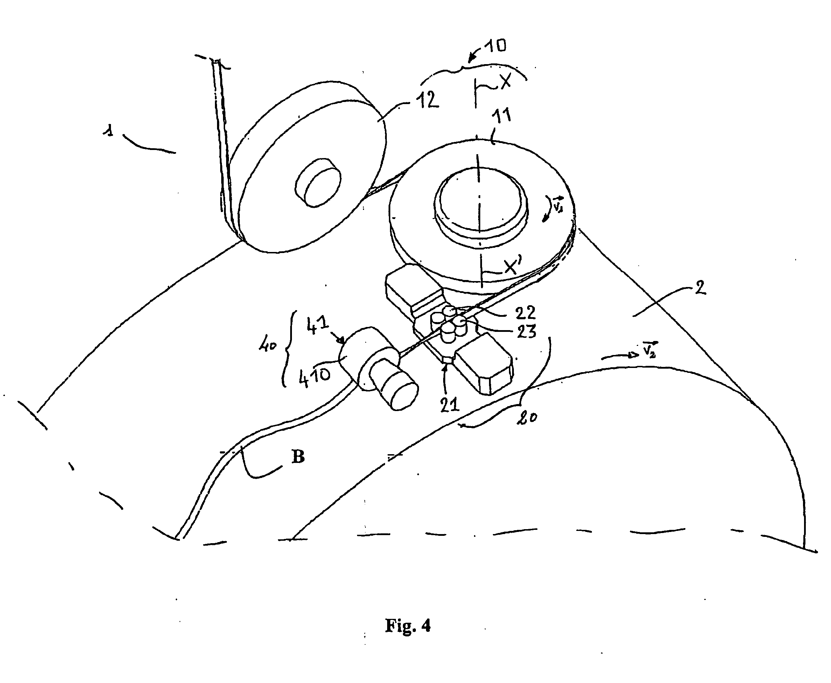

Comme on le voit sur la figure 4, les moyens (10) de délivrance comprennent au moins une poulie (12) d'arrivée de la bandelette, alimentée par un rouleau d'approvisionnement non représenté. L'axe de rotation de la poulie (12) est ici parallèle à celui de la surface de réception 2, ce qui permet au rouleau d'approvisionner aisément un cabestan (11) dont l'axe XX' est perpendiculaire à celui du rouleau (12).

En sortie de la poulie (12), la bandelette est orientée tangentiellement par rapport à la surface de réception (2) mais son passage sur le cabestan (11) entraîne un pivotement à 90° de la bandelette autour de son axe longitudinal. En sortie du cabestan (11), le plan de la nappe de fils ou de câblés constituant la bandelette est orienté perpendiculairement à l'axe de rotation de la surface de réception. Les fils ou les câblés de la bandelette ont donc tous la même position transversale par rapport à la surface de réception, la direction de chaque câblé correspondant à la direction de progression de la bandelette pour alimenter les moyens de déplacement transversal (20, 30) de la bandelette.

Ainsi en sortie du cabestan, vu en élévation, tout se passe comme s'il n'y avait qu'un câblé à onduler.

Le cabestan (11) est motorisé à l'aide d'un moteur (13), par l'intermédiaire d'une courroie de transmission (14) avec une vitesse circonférentielle que l'on notera V1. La maîtrise de la vitesse V1, en synchronisme avec la vitesse circonférentielle V2 de la surface de réception (2), permet de déterminer la quantité de bandelette délivrée sur la surface rotative (2) par tour de celle-ci.

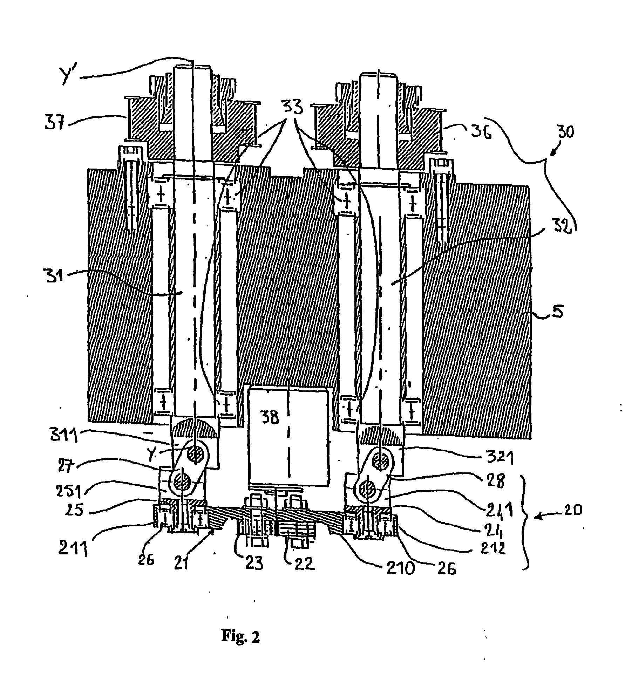

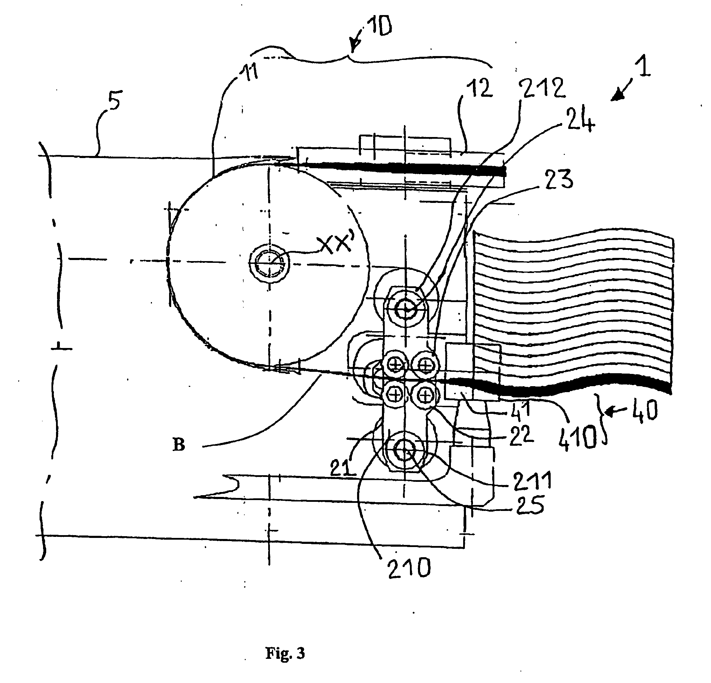

Les moyens de déplacement (20, 30) sont représentés plus particulièrement sur les figures 2 et 3 et comprennent une tête de guidage (20) coopérant avec les moyens (30) portés dans le corps (5).

La tête de guidage (20) comprend une bielle (21), perpendiculaire à l'axe XX' de rotation du cabestan (11), qui porté sur sa face (210) orientée vers l'extérieur de l'appareil d'application (1), deux galets de guidage (22 et 23) d'axes perpendiculaires à ladite bielle (21) et montés libres en rotation par rapport à cette dernière. La bandelette étant orientée parallèlement aux axes des galets, la présence de deux paires de galets tels que représentés sur la figure 3, est avantageuse pour améliorer le guidage de la bandelette.

Afin de faciliter le guidage de la bandelette de renforcement et de l'accompagner dans son déplacement transversal, on peut envisager que les galets de guidage de chaque paire (22 et 23) soient décalés dans sens de progression de la bandelette tout en étant tangents à la droite ayant la direction de progression de la bandelette et passant par le centre de la bielle (21). On peut également disposer les deux galets sans décalage entre eux tels qu'ils sont représentés sur les figures 2, 3 et 4.

Des arbres (24 et 25) d'axes parallèles entre eux sont montés à rotation libre dans les extrémités (211 et 212) de la bielle (21) par l'intermédiaire de roulements à billes (26), les axes des arbres (24 et 25) étant perpendiculaires à ladite bielle (21).

Ces arbres (24 et 25) portent, en sortie de la bielle (21) située vers la face intérieure de la bielle (21) par rapport à l'appareil d'application, respectivement une chape (241, 251).

Les moyens de déplacement (30) comprennent deux arbres (31 et 32) parallèles entre eux et perpendiculaires à la direction de progression de la bandelette, tournant dans des roulements à billes (33) portés par le corps (5) et motorisé à l'aide d'un moteur commun (non représenté) relié respectivement à une poulie d'entraînement (36, 37) pour chaque arbre par une même courroie de transmission (35).

Les arbres (31 et 32) se prolongent en sortie du corps (5) disposés vers la tête de guidage (20) par respectivement une chape (311, 321), ces chapes étant reliées respectivement aux chapes (241 et 251) par des biellettes (27 et 28) parallèles entre elles, assurant la transmission de la motorisation aux arbres (24 et 25).

On désignera par Ω3 la vitesse de rotation des arbres (31, 32, 24 et 25).

La rotation des arbres (31 et 32) permet, avec le passage de la bandelette, de réaliser l'alternance de positionnement des biellettes (27 et 28). En effet, le pivotement des biellettes (27 et 28) autour de leur axe fixé sur les chapes (311 et 321) commande le décentrage de la bielle (21) par rapport aux arbres (31 et 32). Ainsi le centre de la bielle (21) décrit au cours de cette rotation, en projection sur un plan perpendiculaire à l'axe de rotation des arbres (31 et 32) un cercle.

Par ailleurs, le corps (5) porte sur sa face parallèle à la bielle (21), un électro-aimant (38) qui exerce une force de rappel sur la bielle (21).

Les moyens de pose (40) de la bandelette sur la surface de réception (2) comprennent un galet de pose (41) tournant librement autour de son axe de rotation Y, dont la surface de révolution extérieure (410) est située contre la surface de réception (2) de sorte que la bandelette passe entre ladite surface de révolution et la surface de réception. Ce galet de pose (41) est situé à proximité des deux paires de galets de guidage (22 et 23) de sorte à accueillir la bandelette provenant de ces galets et de lui faire subir une rotation à 90° de sorte à ce que le plan de la nappe de fil constituant la bandelette soit orienté parallèlement à la surface de réception donc tangent à cette dernière.

Un bras (42) porte le galet de pose (41) à l'une de ses extrémités (420), l'autre extrémité (421) du bras étant fixé par l'intermédiaire d'un support (43) au corps (5), ledit support étant monté pivotant sur une articulation élastique (45) sur le corps (5) pour garantir la force d'applique de la bandelette sur la surface rotative (2).

On donnera dans ce qui suit succinctement quelques indications sur le fonctionnement de l'appareil d'application.

Notons que la vitesse V2 de rotation de la surface de réception (2) étant déterminée, le réglage de la vitesse V1 de délivrance de la bandelette permet de fixer la quantité de bandelette délivrée par tour de la surface (2).

En l'absence de bandelette, les arbres (31 et 32) étant en rotation, l'électro-aimant (38) maintient en position relevée la bielle (21) avec une position angulaire maximum des biellettes (27 et 28) par rapport aux chapes (311 et 321), et le centre de la bielle (21) décrira alors en projection sur un plan parallèle à la bielle (21); un cercle. Le diamètre de ce cercle correspondant à l'amplitude maximum possible de l'ondulation

En présence d'une bandelette, un équilibre s'établit entre la force exercée par les rouleaux (22 et 23) sous l'action de l'électroaimant et qui aura pour effet de décentrer la bielle (21) et la force de rappel exercée par la bandelette qui va se tendre sous l'effet d'un déplacement transversal par rapport à la direction de progression.

Pour une vitesse V1=V2, l'action de la bielle (21) n'exerce aucun déplacement transversal de la bandelette, de sorte que les câblés sont posés de façon rectiligne.

Lorsque la vitesse V1 de délivrance de la bandelette est supérieure à la vitesse V2 de la surface rotative, l'électroaimant va agir sur la bielle (21) par l'intermédiaire des biellettes (27 et 28) en exerçant une poussée transversale sur la bandelette jusqu'à ce qu'un équilibre se crée avec la force de rappel exercée par la bandelette ainsi mise en tension, la rotation des arbres (31 et 32) amenant l'alternance de position des biellettes (27, 28).

On remarquera que pour V1 supérieure à V2, la vitesse Ω3 de rotation des arbres (31 et 32) permet de déterminer l'alternance des biellettes (27 et 28) par tour de la surface de réception (2) et donc la période des ondulations réalisées par les câblés sur ladite surface. L'amplitude de ces ondulations est directement obtenue par la quantité de bandelette délivrée par tour de la surface de réception (2) puisque c'est cette quantité qui, en «poussant» la bielle (21), détermine l'angle d'inclinaison des biellettes (27 et 28).

On comprendra également qu'il est important de tenir compte de la nature du câblé. En effet, plus le câblé est raide moins l'action de l'électroaimant est déterminante. On ajustera donc la force exercée par ce dernier selon qu'il s'agit d'un câblé métallique ou d'un câblé textile.

De même, pour modifier aisément l'amplitude des ondulations des câblés et donc de la bandelette sur la surface de réception (2), afin comme on l'a vue au début du texte d'avoir des amplitudes différentes en continu selon la position radiale des câblés, il suffit de modifier la quantité de bandelette délivrée par tour de la surface (2) et donc la vitesse V1. L'amplitude des ondulations s'ajuste d'elle-même comme on l'a vu précédemment. Le système est donc très simple à adapter aux modifications des ondulations souhaitées.

## Revendications

1. Appareil d'application (1), sur une surface de réception rotative (2) d'une bandelette de renforcement comprenant un ensemble de fils ou de câblés parallèles entre eux généralement enrobés dans un mélange caoutchouteux, disposés dans le sens longitudinal et formant une nappe continue d'une largeur donnée, comprenant des moyens de délivrance (10), des moyens de déplacement transversal de la bandelette (20, 30) par rapport à la direction de pose de la bandelette sur la surface de réception et des moyens de pose (40), **caractérisé en ce que** les moyens de délivrance de la bandelette, dont les fils ou les câbles sont généralement enrobés dans un mélange caoutchouteux, amenent cette dernière vers les moyens de déplacement transversal (20, 30) avec une orientation du plan de la nappe de fils ou de câblés de la bandelette sensiblement perpendiculaire à l'axe de rotation de la surface de réception rotative (2), et que les moyens de pose (40) de la bandelette, situés en sortie des moyens de déplacement transversal (20, 30), opèrent un pivotement à 90° du plan de la nappe de fils ou de câblés de ladite bandelette autour d'un axe parallèle à la direction de progression de la bandelette, afin de disposer le plan de la nappe de fils ou de câblés de la bandelette tangentiellement par rapport à la surface de réception (2).

2. Appareil selon la revendication 1, **caractérisé en ce que** les moyens de déplacement transversal (20, 30) ont un mouvement alternatif.

3. Appareil selon la revendication 2, d'application d'une bandelette de renforcement sur une surface de réception rotative (2) ayant une vitesse circonférentielle V2, comprenant un corps (5), et comprenant au moins un cabestan rotatif (11) ayant une vitesse circonférentielle V1, **caractérisé en ce que** l'amplitude du déplacement transversal alternatif des moyens de déplacement transversal (20, 30) de la bandelette est asservie directement au rapport des vitesses V1 et V2, cette amplitude étant modifiable de façon continue pendant la pose de la bandelette.

4. Appareil selon l'une quelconque des revendications 2 ou 3, d'application d'une bandelette de renforcement, **caractérisé en ce que** la variation d'amplitude du déplacement transversal alternatif des moyens de déplacement (20, 30) est obtenue par la combinaison d'un mouvement de rotation autour d'un axe sensiblement perpendiculaire à la direction de progression de la bandelette avec un mouvement de pivotement dans un plan contenant l'axe de ladite rotation, l'importance du pivotement étant déterminée par le rapport des vitesses V1 et V2.

5. Appareil selon l'une quelconque des revendications 2 à 4, **caractérisé en ce que** les moyens de déplacement transversal (20, 30) de la bandelette comprennent des premiers arbres rotatifs (31, 32) perpendiculairement à la direction de progression de la bandelette, portés par le corps (5), et une tête de guidage (20) de la bandelette montée pivotante sur lesdits premiers arbres rotatifs.

6. Appareil selon la revendication 5, **caractérisé en ce que** la période des mouvements transversaux alternatifs des moyens de déplacement transversal est proportionnelle à la vitesse de rotation (Ω3) des premiers arbres rotatifs (31, 32).

7. Appareil selon la revendication 5 ou 6, **caractérisé en ce que** la tête de guidage (20) est reliée aux premiers arbres rotatifs (31,32) par des biellettes (27, 28), ces biellettes (27, 28) étant elles-mêmes montées sur la tête de guidage par l'intermédiaire de deuxièmes arbres (24, 25) d'axes parallèles aux premiers et montés à rotation sur ladite tête de guidage.

8. Appareil selon l'une quelconque des revendications 5 à 7, **caractérisé en ce que** la tête de guidage (20) comprend une bielle (21) portant les deuxièmes arbres rotatifs (24, 25).

9. Appareil selon l'une quelconque des revendications 5 à 7, **caractérisé en ce que** la tête de guidage (20) porte au moins deux galets de guidage (22, 23) de la bandelette d'axes perpendiculaires à la direction de progression de la bandelette, montés libre en rotation sur la tête de guidage.

10. Appareil selon l'une quelconque des revendications 5 à 9, **caractérisé en ce que** le corps (5) porte un électro-aimant (38) exerçant une force de rappel sur la tête de guidage.

11. Appareil selon l'une quelconque des revendications 1 à 10, destiné à la fabrication de pneumatiques.

12. Procédé d'application d'une bandelette de renforcement sur une surface de réception rotative, destiné à la fabrication de pneumatiques, qui comprend les étapes suivantes :
- on délivre une bandelette dont l'orientation du plan de la nappe de fils ou de câblés de la bandelette est sensiblement perpendiculaire à l'axe de rotation de la surface de réception,
- on déplace la bandelette alternativement et dans une direction perpendiculaire au plan de la nappe de fils ou de câblés de la bandelette afin de créer des ondulations sur cette dernière,
- on pivote la bandelette de 90° autour d'un axe parallèle à la direction de progression de la bandelette et on pose cette dernière tangentiellement sur la surface de réception (2).

## Patentansprüche

1. Vorrichtung (1) zum Aufbringen eines Verstärkungsstreifens auf eine rotierende Aufnahmefläche (2), wobei der Streifen eine Gesamtheit von zueinander parallelen Drähten oder Seilen umfasst, die in eine Gummimischung gehüllt und in Längsrichtung angeordnet sind und eine kontinuierliche Einlage von gegebener Breite bilden, umfassend Mittel (10) zum Zuführen, Mittel (20, 30) zum Querverschieben des Streifens in Bezug auf die auf die Verlegerichtung des Streifens auf die Aufnahmefläche und Mittel (40) zum Verlegen, **dadurch gekennzeichnet, dass** die Mittel zum Zuführen des Streifens, dessen Drähte oder Seile im Allgemeinen in eine Gummimischung gehüllt sind, diesen Letztgenannten zu den Querverschiebemitteln (20, 30) mit einer Ausrichtung der Ebene der Draht- oder Seileinlage des Streifens zuführen, die im Wesentlichen senkrecht auf die Rotationsachse der rotierenden Aufnahmefläche (2) ist, und dass die Verlegemittel (40) des Streifens, die sich am Ausgang der Querverschiebemittel (20, 30) befinden, ein Schwenken um 90° der Ebene der Draht- oder Seileinlage des Streifens um eine Achse parallel zur Vorschubrichtung des Streifens durchführen, um die Ebene der Draht- oder Seileinlage des Streifens tangential zur Aufnahmefläche (2) anzuordnen.

2. Vorrichtung nach Anspruch 1, **dadurch gekennzeichnet, dass** die Querverschiebemittel (20, 30) eine alternierende Bewegung ausführen.

3. Vorrichtung nach Anspruch 2 zum Aufbringen eines Verstärkungsstreifens auf eine rotierende Aufnahmefläche (2) mit einer Umfangsgeschwindigkeit V2, umfassend einen Körper (5) und umfassend mindestens eine rotierende Spillwinde (11) mit einer Umfangsgeschwindigkeit V1, **dadurch gekennzeichnet, dass** die Amplitude der alternierenden Querverschiebung der Querverschiebemittel (20, 30) des Streifens direkt im Verhältnis der Geschwindigkeiten V1 und V2 gesteuert wird, wobei diese Amplitude kontinuierlich während der Verlegung des Streifens verändert werden kann.

4. Vorrichtung nach einem der Ansprüche 2 oder 3 zum Aufbringen eines Verstärkungsstreifens, **dadurch gekennzeichnet, dass** die Veränderung der Amplitude der alternierenden Querverschiebung der Verschiebemittel (20, 30) durch die Kombination einer Rotationsbewegung um eine im Wesentlichen zur Vorschubrichtung des Streifens senkrechte Achse mit einer Schwenkbewegung in einer Ebene, die die Rotationsachse enthält, erzielt wird, wobei das Ausmaß des Schwenkens durch das Verhältnis der Geschwindigkeiten V1 und V2 bestimmt wird.

5. Vorrichtung nach einem der Ansprüche 2 bis 4, **dadurch gekennzeichnet, dass** die Querverschiebemittel (20, 30) des Streifens erste rotierende Wellen (31, 32) senkrecht auf die Vorschubrichtung des Streifens, die von dem Körper (5) getragen werden, und einen Führungskopf (20) des Streifens umfassen, der schwenkbar auf den ersten rotierenden Wellen befestigt ist.

6. Vorrichtung nach Anspruch 5, **dadurch gekennzeichnet, dass** die Periode der alternierenden Querbewegungen der Querverschiebemittel zur Rotationsgeschwindigkeit (Ω3) der ersten rotierenden Wellen (31, 32) proportional ist.

7. Vorrichtung nach Anspruch 5 oder 6, **dadurch gekennzeichnet, dass** der Führungskopf (20) mit den ersten rotierenden Wellen (31, 32) durch Schwingarme (27, 28) verbunden ist, wobei diese Schwingarme (27, 28) selbst auf dem Führungskopf über zweite Wellen (24, 25) mit zu den ersten parallelen Achsen, die auf dem Führungskopf drehbar befestigt sind, montiert sind.

8. Vorrichtung nach einem der Ansprüche 5 bis 7, **dadurch gekennzeichnet, dass** der Führungskopf (20) eine Stange (21) umfasst, die die zweiten rotierenden Wellen (24, 25) trägt.

9. Vorrichtung nach einem der Ansprüche 5 bis 7, **dadurch gekennzeichnet, dass** der Führungskopf (20) mindestens zwei Führungsrollen (22, 23) des Streifens mit auf die Vorschubrichtung des Streifens senkrechten Achsen trägt, die frei drehbar auf dem Führungskopf befestigt sind.

10. Vorrichtung nach einem der Ansprüche 5 bis 9, **dadurch gekennzeichnet, dass** der Körper (5) einen Elektromagneten (38) trägt, der eine Rückstellkraft auf den Führungskopf ausübt.

11. Vorrichtung nach einem der Ansprüche 1 bis 10, die zur Herstellung von Luftbereifung bestimmt ist.

12. Verfahren zum Aufbringen eines Verstärkungsstreifens auf eine rotierende Aufnahmefläche, das zur Herstellung von Luftbereifung bestimmt ist, umfassend die folgenden Schritte:
- Zuführen eines Streifens, dessen Ausrichtung der Ebene der Draht- oder Seileinlage des Streifens im Wesentlichen senkrecht auf die Rotationsachse der Aufnahmefläche ist,
- alternierendes Verschieben des Streifens in eine Richtung senkrecht auf die Ebene der Draht- oder Seileinlage des Streifens, um auf diesem Letztgenannten Wellungen zu erzeugen,
- Schwenken des Streifens um 90° um eine Achse parallel zur Vorschubrichtung des Streifens und Verlegen dieses Letztgenannten tangential auf der rotierenden Aufnahmefläche (2).

## Claims

1. Apparatus (1) for applying a reinforcement strip to a receiving rotary surface (2), this reinforcement strip comprising a set of yarns or cords which are parallel to one another, generally coated in a rubber mix, arranged in the longitudinal direction and forming a continuous ply of a given width, comprising supply means (10), means (20, 30) of transverse displacement of the strip with respect to the direction in which the strip is laid on the receiving surface, and means (40) of laying, **characterised in that** the means of supplying the strip, whereof the yarns or cords are generally coated in a rubber mix, bring the latter to the means (20, 30) of transverse displacement with the plane of the ply of yarns or cords of the strip oriented substantially perpendicular to the axis of rotation of the receiving rotary surface (2), and **in that** the means (40) of laying the strip, which are located at the exit of the means (20, 30) of transverse displacement, perform a pivoting through 90° of the plane of the ply of yarns or cords of the said strip about an axis parallel to the direction in which the strip progresses, in order to arrange the plane of the ply of yarns or cords of the strip tangentially with respect to the receiving surface (2).

2. Apparatus according to Claim 1, **characterised in that** the means (20, 30) of transverse displacement undergo an alternating movement.

3. Apparatus according to Claim 2, for applying a reinforcement strip to a receiving rotary surface (2) at a circumferential speed V2, comprising a body (5) and comprising at least one rotary capstan (11) at a circumferential speed V1, **characterised in that** the amplitude of the alternating transverse displacement of the means (20, 30) of transverse displacement of the strip is controlled directly with respect to the speeds V1 and V2, this amplitude being capable of undergoing modification continuously as the strip is laid.

4. Apparatus according to either of Claims 2 or 3, for applying a reinforcement strip, **characterised in that** the variation in amplitude of the alternating transverse displacement of the means (20, 30) of displacement is obtained by combining a rotary movement about an axis substantially perpendicular to the direction in which the strip progresses with a pivotal movement in a plane containing the axis of the said rotation, the amount of pivoting being determined by the ratio of the speeds V1 and V2.

5. Apparatus according to any one of Claims 2 to 4, **characterised in that** the means (20, 30) of transverse displacement of the strip comprise first shafts (31, 32) capable of rotation perpendicular to the direction in which the strip progresses and carried by the body (5), and a head (20) for guiding the strip, which is mounted to pivot on the said first rotary shafts.

6. Apparatus according to Claim 5, **characterised in that** the wavelength of the alternating transverse movements of the means of transverse displacement is proportional to the speed of rotation (Ω3) of the first rotary shafts (31, 32).

7. Apparatus according to Claim 5 or 6, **characterised in that** the guide head (20) is connected to the first rotary shafts (31, 32) by connecting rods (27, 28), these connecting rods (27, 28) being themselves mounted on the guide head by way of second shafts (24, 25) whereof the axes are parallel to those of the first and which are mounted to rotate on the said guide head.

8. Apparatus according to any one of Claims 5 to 7, **characterised in that** the guide head (20) comprises a connecting rod (21) carrying the second rotary shafts (24, 25).

9. Apparatus according to any one of Claims 5 to 7, **characterised in that** the guide head (20) carries at least two rollers (22, 23) for guiding the strip whereof the axes are perpendicular to the direction in which the strip progresses and which are mounted to rotate freely on the guide head.

10. Apparatus according to any one of Claims 5 to 9, **characterised in that** the body (5) carries an electromagnet (38) exerting a restoring force on the guide head.

11. Apparatus according to any one of Claims 1 to 10, intended for manufacturing tyres.

12. A process of applying a reinforcement strip to a receiving rotary surface, intended for manufacturing tyres, which comprises the following steps:
- a strip whereof the plane of the ply of yarns or cords of the strip is oriented substantially perpendicular to the axis of rotation of the receiving surface is supplied;
- the strip is displaced alternately, in a direction perpendicular to the plane of the ply of yarns or cords of the strip, in order to produce undulations on the latter;
- the strip is pivoted through 90° about an axis parallel to the direction in which the strip progresses, and the latter is laid tangentially on the receiving rotary surface (2).
